# EUROPEAN PATENT APPLICATION

(11) **EP 2 116 141 A1**
(43) Date of publication of application: **11.11.2009**
(21) Application number: 08155883.5
(22) Date of filing: 08.05.2008
(51) Int. Cl.: A23N 1/00, A47J 19/02

(54) **Device for extacting a juice from a piece of fruit or vegetable and pressure element for use in such a device**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

Device for forming a juice from apiece of fruit or vegetable. The device comprises a housing (16) provided with a juice extractor (15), a drive mechanism (37) for driving the juice extractor (15), and a feed opening (13) for feeding the piece of fruit or vegetable to the juice extractor (15). The device further comprises a pressure element (11) for pressing the piece of fruit or vegetable via the feed opening (13) against the juice extractor (15). The pressure element (11) is provided with a clamping mechanism (17) for clamping the piece of fruit or vegetable. Non-processed parts can also be removed from the device by means of the pressure element (11).

## Description

### FIELD OF THE INVENTION

The invention relates to a device for extracting a juice from a piece of fruit or vegetable, comprising a housing provided with a juice extractor, a drive mechanism for driving the juice extractor, a feed opening for supplying the piece of fruit or vegetable to the juice extractor, and a pressure element for pressing the piece of fruit or vegetable through the feed opening against the juice extractor.

The invention further relates to a pressure element for use in such a device.

### BACKGROUND OF THE INVENTION

A device for extracting a juice from a piece of fruit or vegetable is known from US 6 543 340 B1. This relates to a device for processing food, for example for extracting a juice from a fruit or vegetable, wherein the material introduced through a feed opening is processed into a juice. The material to be processed is pressed against the juice extractor by means of a pressure element. The known device is designed for processing all of the introduced material, whether peeled or unpeeled. This has the disadvantage that, if the peel or rind is not to be processed, the material has to be peeled beforehand. Processing of the peel may be undesirable, for example because this gives the juice a bitter flavor, as is the case with oranges. The peeling process is an additional step which requires time. Moreover, the peeling process may be experienced as being a chore.

### SUMMARY OF THE INVENTION

It is an object of the invention to provide a device with which juice can be obtained from a piece of fruit or vegetable provided with a peel or rind that is not to be processed, such that this peel or rind of the piece of fruit or vegetable is not processed, i.e. such that the piece of fruit or vegetable need not be peeled.

According to the invention, this object is achieved in that the pressure element is provided with a clamping mechanism for clamping the piece of fruit or vegetable that is to be processed.

Given such a pressure element, the piece of fruit or vegetable to be processed can be clamped on the pressure element. This relates to, for example, a halved citrus fruit. During operation of the device, the piece of fruit or vegetable is fastened in the clamping mechanism of the pressure element in that the piece of fruit or vegetable is introduced in to the clamping mechanism. The clamped-in piece of fruit or vegetable is moved into the juice extractor by means of the pressure element. During operation of the juice extractor, a pressure is exerted on the pressure element, for example by the user, such that the piece of fruit or vegetable is processed into a juice. After the portion of the piece of fruit or vegetable that is to be processed into a juice has been processed, the non-processed portion, in particular the peel or rind, is removed from the device through the feed opening by the pressure element. The juice thus formed may be made available to the user in a filtered or unfiltered form. Other ingredients may be added through the feed opening, depending on the object of the processing of the piece of fruit or vegetable.

The pressure element will generally be made from a material that is usual in the manufacture of devices of this type, such as synthetic resin, plastic or metal. It is also possible to manufacture the pressure element from a ceramic material or glass. A combination of materials, such as metal for the clamping mechanism and synthetic resin or plastic for the other components, is also possible.

The device according to the invention may be constructed, for example, as a juice centrifuge, food processor, or smoothie maker.

The device according to the invention may be used domestically as well as professionally, whether or not for the processing of fruit or vegetable on an industrial scale.

A preferred embodiment of the device according to the invention is **characterized in that** the clamping mechanism has a fastening position for fastening the piece of fruit or vegetable and a clamping position for clamping the piece of fruit or vegetable. When the piece of fruit or vegetable is pressed against the clamping mechanism of the pressure element, the clamping mechanism will enter the fastening position. The clamping mechanism enters the clamping position when the piece of fruit or vegetable is released. The piece of fruit or vegetable in this position is held clamped in the clamping mechanism such that the piece of fruit or vegetable can be pushed against the juice extractor through the feed opening. The juice can be formed from the piece of fruit or vegetable to be processed in the manner as described above. Subsequently, the pressure element is removed from the feed opening. The portion of the piece of fruit or vegetable that is not to be processed into a juice is still clamped in the clamping mechanism of the pressure element at that moment. If pressure is exerted on the portion of the piece of fruit or vegetable that is not to be processed into a juice, for example by the user, the clamping mechanism can be brought into the fastening position. In this position the non-processed portion of the piece of fruit or vegetable can be taken from the clamping mechanism. In addition to the above two positions, the clamping mechanism may have a third position which is referred to as the idle position. The clamping mechanism is not in use in this position.

A preferred embodiment is **characterized in that** the clamping mechanism is provided with two or more clamping parts of which at least one part is movably arranged. In a practical embodiment, the clamping mechanism has four to ten clamping parts among which there are preferably six movable parts. In a practical embodiment, said clamping parts are plate-shaped members.

A preferred embodiment is **characterized in that** the clamping parts define a clamping opening in which the piece of fruit or vegetable can be clamped in. In a practical embodiment, this opening is round. The opening may heave the shape of the piece of fruit or vegetable that is to be processed.

A preferred embodiment is **characterized in that** the clamping mechanism comprises a support portion from which each of the movable clamping parts is suspended with hinging possibility. In a practical embodiment, a hinge is located at the edge of the clamping mechanism diametrically opposite the clamping part and adjacent to the edge of the clamping mechanism. In a further practical embodiment, the hinge is located approximately centrally above the clamping opening defined by the clamping parts.

A preferred embodiment is **characterized in that** the hinges allow a limited rotation of each of the movable clamping parts. The limited rotation renders it simple to bring a piece of fruit or vegetable that is to be processed into the clamping opening, irrespective of the position of the pressure element. In a practical embodiment, the rotation allowed for each clamping part is limited to a value of between three and five degrees.

A preferred embodiment is **characterized in that** at least one clamping part is provided with a clamping edge that faces the clamping opening. In a practical embodiment, this clamping edge encloses an angle of between 45 and 55 degrees with the plane of the aperture defined by the circumference of the clamping opening.

A preferred embodiment is **characterized in that** at least one clamping edge is provided with at least one projection that is directed towards the clamping opening. Such a projection improves the clamping of the piece of fruit or vegetable to be processed. In a practical embodiment, all clamping parts are provided with at least one projection, preferably with 8 to 10 projections. These projections are, for example, pin-shaped or dentate. In a practical embodiment, the projections are placed at equal distances from one another on the clamping part.

A preferred embodiment is **characterized in that** mutually adjoining movable and/or non-movable parts of the pressure element can touch each other by comparatively small surface areas only. This may be achieved, for example, in that elevations or studs are placed thereon. A small contact surface ensures that the moving clamping parts cannot stick to the non-moving parts of the pressure element, or to one another.

A preferred embodiment is **characterized in that** the pressure element is provided with an abutment for limiting the stroke depth of the pressure element in the feed opening. This prevents the pressure element from being inserted too far into the feed opening, which would cause the piece of fruit or vegetable that is not to be processed to be processed after all. In a practical embodiment, the stroke depth is preferably adjusted such that the minimum distance between the pressure element and the juice extractor is 3 mm.

A preferred embodiment is **characterized in that** the pressure element is provided with an attachment that can be detachably fastened for deactivating the operation of the clamping mechanism and that is provided with a pressure surface. The pressure surface in a practical embodiment is shaped such that it matches the shape of the juice extractor, which is, for example, conical. When this attachment is used, the piece of fruit or vegetable is not clamped in and can be fully processed. This is practical if the complete piece of fruit or vegetable is to be processed into juice. The combination of the pressure element comprising the clamping mechanism and the attachment offers the possibility of processing both a piece of fruit or vegetable that is partly not to be processed in to a juice and a piece of fruit or vegetable that is to be fully processed in to a juice in a simple manner. A modification analogous to this preferred embodiment provides a detachable fastening of the clamping mechanism in one of the preferred embodiments on a pressure element that is designed such that the piece of fruit or vegetable to be processed is fully processed into a juice. Since the clamping mechanism is detachably fastened to such a pressure element, it is also suitable for processing a piece of fruit or vegetable having a non-usable portion, especially a peel or rind, in a simple manner as described above.

The invention also relates to a pressure element provided with a clamping mechanism for clamping a piece of fruit or vegetable for use in a device according to the invention.

A preferred embodiment of the pressure element according to the invention is **characterized in that** the clamping mechanism has a fastening position for fastening the piece of fruit or vegetable and a clamping position for clamping the piece of fruit or vegetable.

### BRIEF DESCRIPTION OF THE DRAWINGS

The invention will be explained in more detail below with reference to a few embodiments shown in the drawings, in which:
Fig. 1 is a diagrammatic perspective view, partly cut away, of an embodiment of the device according to the invention,
Fig. 2 is a diagrammatic cross-sectional view of the device of Fig. 1,
Fig. 3 diagrammatically shows a pressure element and an attachment as shown in Fig. 1,
Fig. 4 is a diagrammatic cross-sectional view of an embodiment of a pressure element according to the invention with a clamping mechanism in its fastening position,
Fig. 5 shows the pressure element as in Fig. 4, but with the clamping mechanism in its clamping position, and
Fig. 6 shows the pressure element of Fig. 4 with the clamping mechanism in its idle position.

### DETAILED DESCRIPTION OF THE EMBODIMENTS

Identical parts have been given the same reference numerals in Figures depicting the same embodiments.

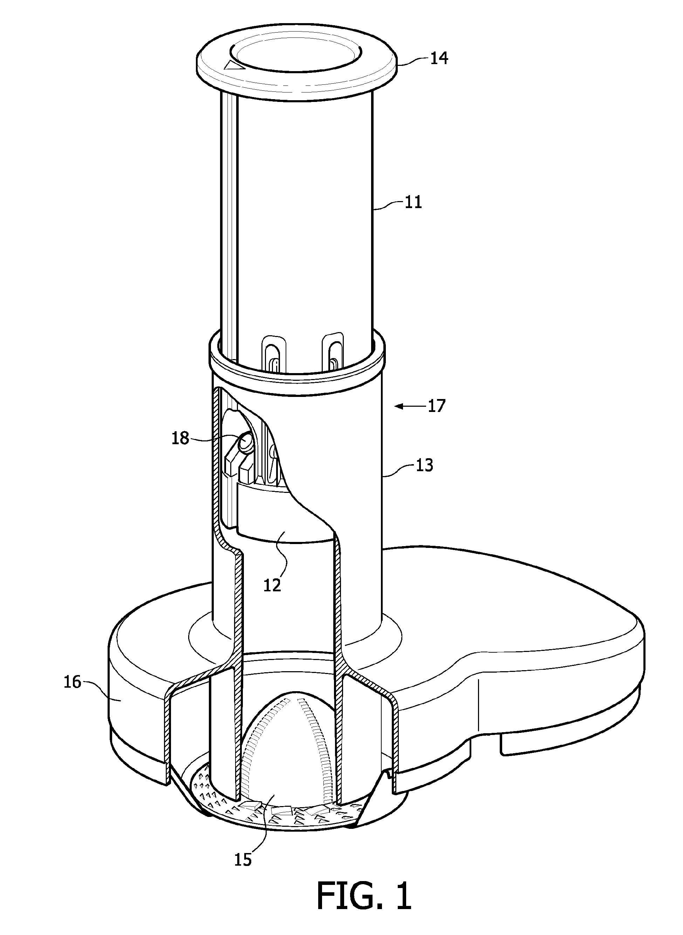

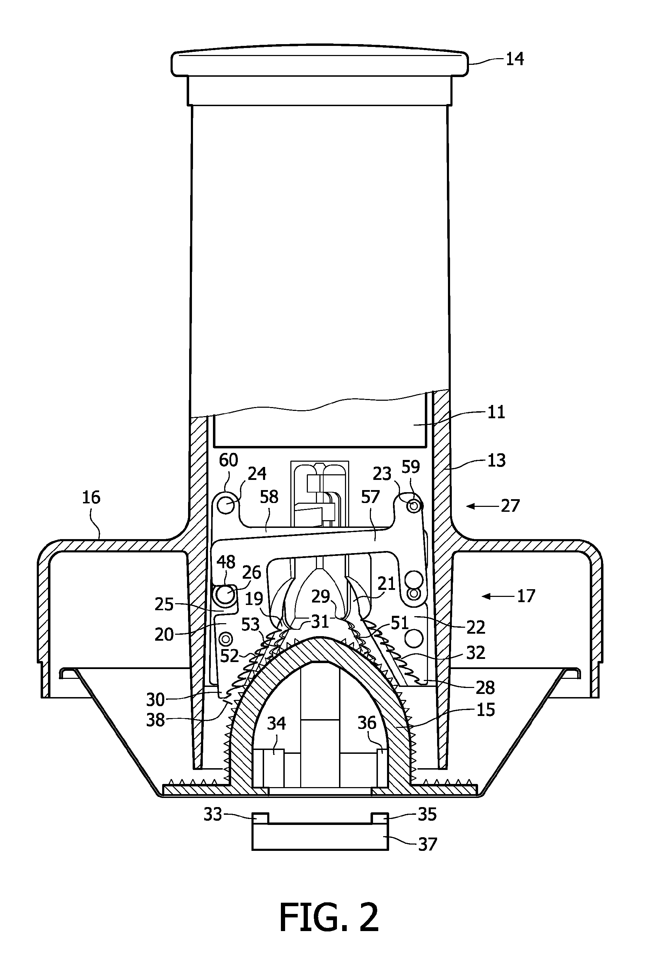

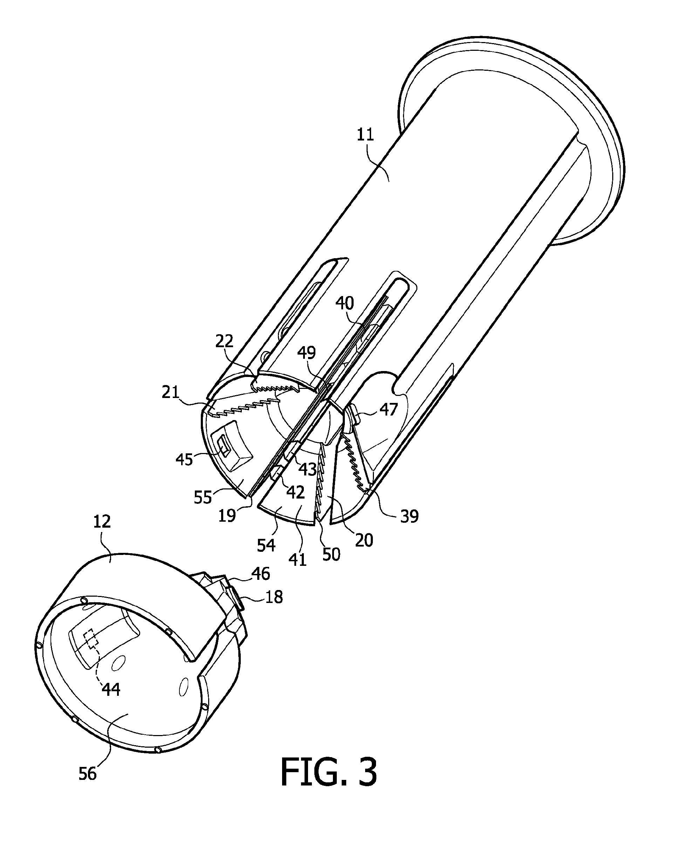

Fig. 1 shows a pressure element 11 provided with an attachment 12. The pressure element 11 has entered a feed opening 13 of a housing 16. The pressure element 11 is provided with an abutment 14, constructed as a projecting rim here. Fig. 1 further shows a juice extractor 15 which is present inside the housing 16. A clamping mechanism 17 present in the pressure element is only partly visible in Fig. 1. The clamping mechanism is shown in more detail in Figs. 2 and 3.

The pressure element 11 can be used both for pressing a piece of fruit or vegetable that is to be fully processed on the juice extractor 15 and for pressing a piece of fruit or vegetable that is not to be fully processed on the juice extractor 15. This functional difference is achieved in that the pressure element is provided with an attachment 12. The piece of fruit or vegetable to be processed is fully processed if the pressure element is fitted with the attachment 12. If the pressure element is not fitted with the attachment 12, the piece of fruit or vegetable to be processed is clamped in the clamping mechanism 17, and part of the piece of fruit or vegetable to be processed will not be processed. The clamping mechanism 17 of the pressure element 11 has been deactivated by the presence of the attachment 12 in the situation depicted in Fig. 1. The attachment 12 is snapped onto the lower side of the pressure element when the pressure element is not in use and is not in the feed opening 13. The attachment can be removed from the pressure element 11 again by means of a button 18. The fastening system of the attachment 12 is shown in more detail in Fig. 3. After the attachment 12 has been removed, a piece of fruit or vegetable to be processed can be clamped in the clamping mechanism 17.

In the situation shown in Fig. 1, in which the pressure element 11 is fitted with the attachment 12, the piece of fruit or vegetable to be fully processed (not shown in this Figure) is brought into the feed opening 13. If the piece of fruit or vegetable does not fit in the feed opening 13, it should be cut into smaller pieces that do fit in the feed opening 13 for processing. Then the juice extractor 15 is started. A drive mechanism (cf. also Fig. 2) generates a rotary movement of the juice extractor 15. The juice extractor 15 may be started both before and after the insertion of the piece of fruit or vegetable to be processed into the feed opening 13. The pressure element 11 provided with the attachment 12 is moved into the feed opening 13 and a pressure is exerted on the pressure element 11. This pressure will urge the piece of fruit or vegetable to be processed against the juice extractor 15 and convert it into juice. In this embodiment the abutment 14 has no limiting function but merely serves as a hold. The combination of pressure element 11 and attachment 12 can thus be pressed against the juice extractor 15, so that the piece of fruit or vegetable can be fully processed.

After the piece of fruit or vegetable to be processed has been converted into juice, the drive mechanism of the juice extractor 15 can be switched off and the pressure element 11 can be taken from the feed opening 13. If a plurality of pieces of fruit or vegetable arte to be fully processed, they may be jointly introduced into the feed opening 13, provided the volume of the feed opening allows this, and be jointly processed into a juice in the manner as described above. If the volume of the feed opening 13 is insufficient, the processing is to be split up into a number of steps. It is also possible to process the pieces of fruit or vegetable to be processed one after the other.

The pressure element 11 and the attachment 12 may be manufactured from a sturdy type of synthetic resin, plastic or from metal. The pressure element 11 and the attachment 12 may alternatively be manufactured from a ceramic material or glass. Combinations of different materials are also conceivable.

Fig. 2 is a diagrammatic cross-sectional view of the device of Fig. 1. The pressure element 11 in this Figure is shown without the attachment 12. In this configuration, the clamping mechanism 17 can be used for retaining the piece of fruit or vegetable to be processed in its clamping parts. The preferred embodiment shown comprises a total of six clamping parts. Four clamping parts 19, 20, 21, 22 are visible in this Figure. The remaining two clamping parts are not visible in Fig. 2, being present in locations mirrored relative to the sectional plane opposite the clamping parts 19 and 21. Said clamping parts have been referenced 39 and 40 in Fig. 3. All clamping parts are suspended in a similar manner and are movable in the preferred embodiment shown. The clamping parts each hinge about a pivot or hinge provided with a pivot axis. The hinges and pivot axes of the clamping parts 20 and 22, referenced the hinges 59 and 60 and the pivot axes 23 and 24, respectively, are visible in Fig. 2. The clamping parts 20 and 22 are pivotable in the sectional plane about these pivot axes. The angle through which the clamping parts can rotate is limited. This is visible for the clamping part 20 in the Figure. The clamping part 20 is provided with a clamping part recess 25. A rotation stop 26 extends in the clamping part recess 25. In the situation shown here, the clamping part 20 is in a rotational position wherein its center of gravity is as low as possible under the influence of the forces of gravity, i.e. in a direction towards the juice extractor 15. The rotation is limited in that the rotation stop 26 hits against an upper rim 48 of the clamping part recess 25. The pivot axes and rotation stops together from a support portion 27 of the clamping mechanism 17.

Each clamping part is provided with a clamping edge. The clamping edges 28, 29, 30, and 31 are visible in Fig. 2, while the other clamping edges 49 and 50 are shown in Fig. 3. In the embodiment shown, the clamping edges are provided with teeth, which teeth are referenced 32, 50, 51, and 52 in this Figure in as far as they are visible therein. Said teeth reinforce the fixation of the piece of fruit or vegetable to be processed in the clamping mechanism. It is important to fix the piece of fruit or vegetable to be processed securely in order to prevent that it will rotate along with the rotating juice extractor 15 during the rotation thereof. The edge of the clamping part is connected to a pivot axis via a clamping part arm. Fig. 2 shows clamping part arms 57 and 58 which form part of the clamping parts 20 and 22, respectively.

The juice extractor 15 can be driven by a drive mechanism 37 which is joined to the juice extractor 15 via two drive pins 33 and 35 that enter mating bushes 34 and 36.

The clamping parts 19, 20, 21, 22, 39, and 40 are manufactured from a sturdy material, for example metal, ceramic material, glass, plastic or synthetic resin that can withstand the forces exerted on the clamping parts 19, 20, 21, 22, 39, and 40 while the piece of fruit or vegetable is being pressed against the juice extractor 15. In general, the clamping parts and the teeth will be manufactured from one piece of material.

Fig. 2 does not show the piece of fruit or vegetable to be processed. Since the attachment 12 is absent, the insertion depth of the pressure element 11 in the feed opening 13 is limited by the abutment 14. This limitation implies that the clamping parts 19, 20, 21, 22, 39, 40 do not make contact with the juice extractor 15, and a free space 38 remains between the clamping parts 19, 20, 21, 22, 39, 40 and the juice extractor 15. During processing of a piece of fruit or vegetable that should not be fully processed, for example an unpeeled half of an orange, the portion that is not to be processed will lie in the free space 38 when the pressure element has been fully inserted in the feed opening up to the abutment. The result is that the portion that is not to be processed does not come into contact with the juice extractor and is not converted into juice.

Fig. 3 is a diagrammatic elevation of the pressure element 11 and the attachment 12 shown in the same manner as in Fig. 1. In contrast to Fig. 1, however, the pressure element 11 and the attachment 12 are not interconnected in Fig. 3. All six clamping parts 19, 20, 21, 22, 39, and 40 of the clamping mechanism 17 are visible in this Figure. The clamping parts 19, 20, 21, 22, 39, and 40 in this preferred embodiment enclose a round clamping opening 41. Spacer studs are provided in order to prevent clamping parts making contact with the non-movable part of the pressure element over a large surface area. The spacer studs 42 and 43 visible in Fig. 3 prevent the clamping part 19 from making contact with the adjacent non-movable parts 54 and 55 of the pressure element over a large surface area. Similar spacer studs are provided for the other clamping parts.

The attachment 12 is detachably fastened to the pressure element 11 in that it is snapped home on the pressure element 11. The attachment 12 is for this purpose provided with a tag 44 (shown in broken lines here: the tag 44 is at the side of the attachment 12 that is not visible) and with a tag 46 that can enter respective recesses 45 and 47. The tag 46 is movable and connected to the button 18. The attachment 12 is moved against the pressure element 11 such that the tags 44 and 46 enter the recesses 45 and 47, whereby the attachment is snapped home on the pressure element 11. The tag 46 is moved inwards through a pressure on the button 10, so that the attachment 12 can be taken off the pressure element 11. The pressure surface 56 is formed such that it extends over the juice extractor 15, as is evident from Fig. 1. The pressure surface has a concave profile adapted to match the shape of the juice extractor.

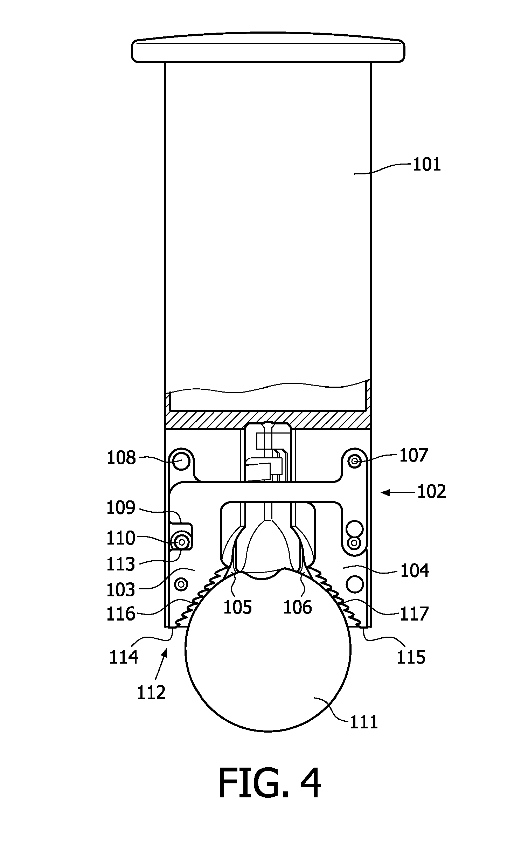

Fig. 4 is a diagrammatic cross-sectional view of an embodiment of the pressure element according to the invention, provided with a clamping mechanism 102. The pressure element is referenced 101. The clamping mechanism 102 comprises six clamping parts. Four clamping parts 103, 104, 105, and 106 are visible in Fig. 4. The other two clamping parts are not visible and are located in mirrored positions relative to the sectional plane opposite the clamping parts 105 and 106. The clamping parts are suspended in a similar manner. The clamping parts each hinge about a pivot axis. The pivot axes of the clamping parts 103 and 104 are referenced 107 and 108, respectively. The clamping parts 103 and 104 rotate about these pivot axes in the plane of the cross-section. The angle through which the clamping parts can rotate is limited. This is visible for the clamping part 103 in Fig. 4. The rotation of the other clamping parts is similarly limited. In fact these are pivoting movements. The clamping part 103 is provided with a clamping part recess 109. A rotation stop 110 extends in the clamping part recess 109. The clamping parts are each provided with a clamping edge. The respective clamping edges 114 and 115 of the clamping parts 103 and 104 are visible in Fig. 4. The clamping edges 114 and 115 are provided with teeth 116 and 117.

In the situation shown here, a piece of fruit or vegetable 111 to be processed is pressed against the clamping parts 103, 104, 105, and 106 from an inlet side 112 until the clamping parts have pivoted to a maximum degree. This is visible for the clamping part 103, where a lower edge 113 of the clamping part recess 109 presses against the rotation stop 110. Since the piece of fruit or vegetable 111 to be processed is pressed against the clamping mechanism, the teeth 116 and 117 will penetrate into the piece of fruit or vegetable 111 to be processed.

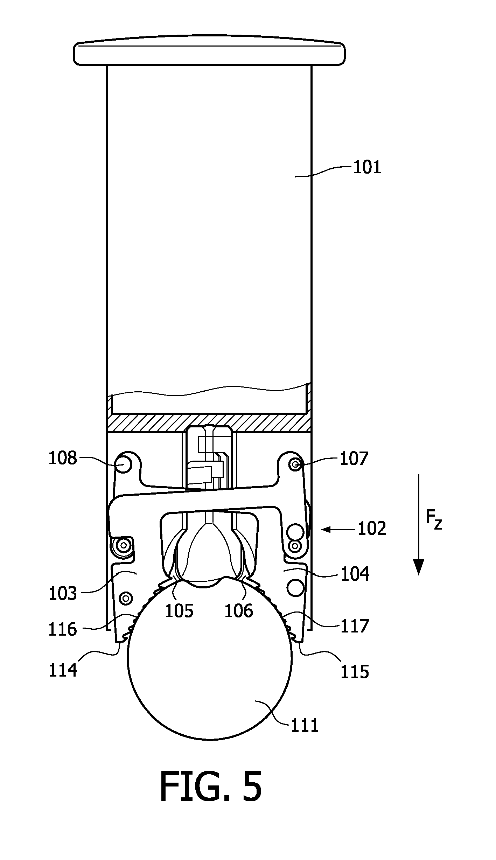

When the piece of fruit or vegetable 111 to be processed is released, the clamping mechanism 102 will enter the clamping position. This clamping position is shown in Fig. 5. The released piece of fruit or vegetable 111 to be processed moves down under the influence of the forces of gravity, i.e. in the direction of the arrow F_{z}. This provides a space for the clamping parts to rotate about their pivot axes. The distance between the clamping edges of mutually opposed clamping parts, for example the clamping edges 114 and 115, is reduced thereby. The clamping edges accordingly press against the piece of fruit or vegetable 111 to be processed. The teeth 116 and 117 of the clamping edges 114 and 115 penetrate more deeply into the piece of fruit or vegetable 111 to be processed as a result of this, so that the piece of fruit or vegetable 111 to be processed is held securely clamped in the clamping mechanism.

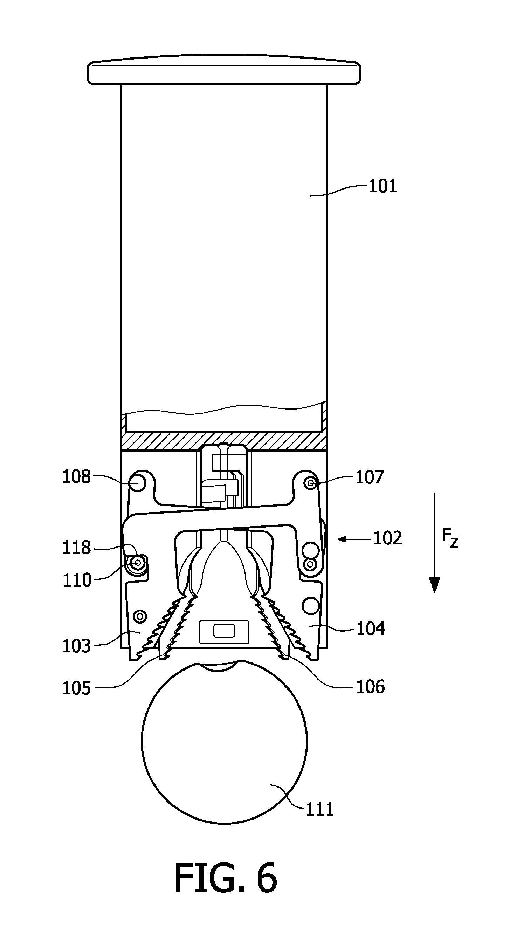

Fig. 6 shows the pressure element 101 as shown in Fig. 4 with the clamping mechanism in the idle position. In this idle position there is no piece of fruit or vegetable 111 to be processed in the clamping mechanism 102. All clamping parts are pivoted to a maximum degree about their pivot axes. The pivot axes 107 and 108 of the clamping parts 103 and 104 are visible in the Figure. Under the influence of the forces of gravity, which act in the direction of the arrow F_{z}, the centers of gravity of the clamping parts will tend to move as far as possible in the direction of said arrow. This movement is limited by an upper rim 118 of the recess which abuts against the rotation stop 110.

### LIST OF REFERENCE NUMERALS:

- 11: pressure element
- 12: attachment
- 13: feed opening
- 14: abutment
- 15: juice extractor
- 16: housing
- 17: clamping mechanism
- 18: button
- 19: clamping part
- 20: clamping part
- 21: clamping part
- 22: clamping part
- 23: pivot axis
- 24: pivot axis
- 25: clamping part recess
- 26: rotation stop
- 27: support portion of clamping mechanism
- 28: clamping edge
- 29: clamping edge
- 30: clamping edge
- 31: clamping edge
- 32: teeth
- 33: connecting pin
- 34: connecting bush
- 35: connecting pin
- 36: connecting bush
- 37: drive mechanism
- 38: free space
- 39: clamping part
- 40: clamping part
- 41: clamping opening
- 42: spacer stud
- 43: spacer stud
- 44: tag
- 45: recess
- 46: tag
- 47: recess
- 48: recess upper edge
- 49: clamping edge
- 50: clamping edge
- 51: teeth
- 52: teeth
- 53: teeth
- 54: non-movable part of clamping mechanism
- 55: non-movable part of clamping mechanism
- 56: pressure surface
- 57: clamping part arm
- 58: clamping part arm
- 59: pivot
- 60: pivot
- 101: pressure element
- 102: clamping mechanism
- 103: clamping part
- 104: clamping part
- 105: clamping part
- 106: clamping part
- 107: pivot axis
- 108: pivot axis
- 109: clamping part recess
- 110: rotation stop
- 111: piece of fruit or vegetable
- 112: inlet side
- 113: recess lower edge
- 114: clamping edge
- 115: clamping edge
- 116: teeth
- 117: teeth
- 118: recess upper edge

## Claims

1. A device for extracting a juice from a piece of fruit or vegetable, comprising a housing provided with a juice extractor, a drive mechanism for driving the juice extractor, and a feed opening for supplying the piece of fruit or vegetable to the juice extractor, and a pressure element for pressing the piece of fruit or vegetable through the feed opening against the juice extractor,
**characterized in that** the pressure element is provided with a clamping mechanism for clamping the piece of fruit or vegetable.

2. A device as claimed in claim 1, **characterized in that** the clamping mechanism has a fastening position for fastening the piece of fruit or vegetable and a clamping position for clamping the piece of fruit or vegetable.

3. A device as claimed in claim 1 or 2, **characterized in that** the clamping mechanism is provided with two or more clamping parts of which at least one part is movably arranged.

4. A device as claimed in claim 3, **characterized in that** the clamping mechanism comprises a total of six clamping parts formed by six movably suspended arms.

5. A device as claimed in claim 3 or 4, **characterized in that** the clamping parts define a clamping opening in which the piece of fruit or vegetable can be clamped in.

6. A device as claimed in claim 5, **characterized in that** the clamping parts define a round clamping opening.

7. A device as claimed in claim 3, 4, 5, or 6, **characterized in that** the clamping mechanism comprises a support portion from which each of the movable clamping parts is suspended with hinging possibility.

8. A device as claimed in claim 7, **characterized in that** the hinges allow a limited rotation of each of the movable clamping parts.

9. A device as claimed in any one of the claims 3 to 8, **characterized in that** at least one clamping part is provided with a clamping edge that faces the clamping opening.

10. A device as claimed in claim 9, **characterized in that** at least one clamping edge is provided with at least one projection that is directed towards the clamping opening.

11. A device as claimed in any one of the claims 3 to 10, **characterized in that** mutually adjoining movable and/or non-movable parts of the pressure element can touch each other by comparatively small surface areas only.

12. A device as claimed in any one of the claims 1 to 11, **characterized in that** the pressure element is provided with an abutment for limiting a stroke depth of the pressure element in the feed opening.

13. A device as claimed in any one of the claims 1 to 12, **characterized in that** the pressure element is provided with an attachment that can be detachably fastened for deactivating the operation of the clamping mechanism and that is provided with a pressure surface.

14. A pressure element provided with a clamping mechanism for clamping a piece of fruit or vegetable for use in a device as claimed in any one of the preceding claims and constructed as defined in any one of the preceding claims.

15. A pressure element as claimed in claim 14, **characterized in that** the clamping mechanism has a fastening position for fastening the piece of fruit or vegetable and a clamping position for clamping the piece of fruit or vegetable.
